# EUROPÄISCHE PATENTSCHRIFT

(11) **EP 0 347 635 B1**
(45) Veröffentlichungstag und Bekanntmachung des Hinweises auf die Patenterteilung: **02.03.1994**
(21) Anmeldenummer: 89110103.2
(22) Anmeldetag: 03.06.1989
(51) Int. Cl.: F16C 33/26

(54) **Lagersegment für Segmentlager**
Bearing segment for segmented bearing
Segment de palier pour palier segmenté

(30) Priorität: 22.06.1988 DE 3821008
(43) Veröffentlichungstag der Anmeldung: 27.12.1989
(73) Patentinhaber: J.M. Voith GmbH, D-89522 Heidenheim (DE)
(72) Erfinder: Baehr, Theodor, D-7920 Heidenheim (DE); Keck, Heinz, D-7923 Zang (DE)
(74) Vertreter: Weitzel, Wolfgang, Dr.-Ing.

(56) Entgegenhaltungen:
- GB-A- 568 704
- GB-A- 636 339
- GB-A- 2 032 011
- US-A- 3 575 476

## Beschreibung

Die Erfindung betrifft ein Lagersegment entsprechend dem Oberbegriff des Patentanspruchs 1. Ein solches Lagersegment ist bekannt aus GB-A-568 704. Hierbei wird durch die parallelen Lamellen, die von einer hydraulischen, in einem unterhalb der Lamellen angeordneten Kolbenraum enthaltenen Druckflüssigkeit unterstützt sind, eine Anpassung der beschriebenen Unterstützungseinrichtung an verschieden geformte Stütz-Oberflächen der abzustützenden Bauteile erreicht.

Weiterhin sind bereits durch die DE-PS 663 245 Radiallager bekannt, bei denen der Tragkörper aus einzelnen, zueinander parallelen Lamellen besteht, deren Trennebenen senkrecht zu der Lagerachse verlaufen. Dabei wird durch Nuten oder zwischengelegte saugfähige Ringe eine Schmierflüssigkeit zur Lagerfläche geleitet. Hierbei sind die einzelnen Lamellen mit einer zylindrischen Innenbohrung versehen, welche in ihrer Gesamtheit die Lagerfläche ergeben. Der Grund dafür ist, für kleine, billige Lager auf einfache Weise Betriebssicherheit bei weitgehender Wartungsfreiheit zu erreichen.

Es ist Aufgabe der Erfindung, eine Segmentlagerung für ein rotierbares Werkstück, insbesondere in einer Walzenschleifmaschine, mit zylindrischer Oberfläche zu schaffen, die für einen gewissen Lagerdurchmesserbereich einsetzbar ist, ohne daß bauliche Änderungen vorgenommen werden müssen.

Diese Aufgabe wird erfindungsgemäß durch die Merkmale des kennzeichnenden Teils des Patentanspruchs 1 gelöst.

Nachfolgend wird die Erfindung anhand der in den Figuren dargestellten Beispiele erläutert, wobei
- Fig. 1: einen Querschnitt durch eine erste Ausführungsform des Lagersegments und
- Fig. 2: teilweise eine Draufsicht und Schnitt senkrecht dazu
darstellen.

Das erfindungsgemäße Lagersegment besteht aus einzelnen, zueinander parallelen Lamellen 2, die parallel zur Lagerachse bzw. Achse des Werkstücks - z.B. eine Walze W - verlaufen. Dieses Lamellenpaket wird zentral durch eine Mittelstütze 3 unterteilt. Das Lamellenpaket und die Mittelstütze 3 weisen eine Lagerfläche auf, die einem Zylindersektor entspricht und entsprechend einem mittleren Lagerradius dimensioniert ist. Die eigentliche Lagerfläche wird durch eine dünne Lagerschale 1 aus nachgiebigem Material gebildet. Es kann ein mit Weißmetall beschichtetes Stahlblech oder auch eine Schale aus sehr widerstandsfähigem, vorzugsweise auch mit guten Gleiteigenschaften für Notlauf ausgestattete Schale aus Kunststoff sein (z.B. auch aus mit Kohlenstoff- oder Aramidfaser verstärktem Kunstharz). Das Lamellenpaket wird in einem Führungsraum 8 geführt, wobei es durch seitliche Stützplatten 4 verstärkt ist. Das Lamellenpaket wird mit den Stützplatten zusammengehalten durch Spannbolzen 20, die das Lamellenpaket mittels Tellerfedern 21 und Muttern 22 zusammenspannen. Das Lamellenpaket bildet mit der Mittelstütze 3 dann eine Einheit. Jedoch ist die Mittelstütze 3 im Verhältnis zu den Lamellen in der Lagerkraftrichtung in einem gewissen Maße beweglich. Die Mittelstütze geht von einem zylindrischen Teil 6 bei 36 in einen quaderförmigen Teil über, der den Raum zwischen den Lamellen vollständig ausfüllt.

Die Mittelstütze 3 kann mittels in einer Bohrung 16 derselben angreifender Hubspindel 5 - hier über ein Kegelradgetriebe mit Kegelrädern 15 und 17 - verstellt werden. Dabei ist die Hubspindel 5 mittels einem Bund 7 und Lager 9 am Gehäuse 24 des Auflagers festgelegt. Ein weiteres Lager 13 der Hubspindel 5 ist in einer Halteplatte 14 abgestützt. Dabei ist vorzugsweise das Lager 9 ein Rollenlager und das Lager 13 ein Schrägkugellager. Das treibende Kegelzahnrad 17 sitzt auf einer Welle 19 (hier nur strichpunktiert angedeutet), welche z.B. mittels Handrad (hier nicht dargestellt) gedreht werden kann.

Der von den Lamellen 2 und Stützplatten 4 freie Teil des Führungsraumes 8 dient als Kolbenraum und ist mit hydraulischer Druckflüssigkeit gefüllt. So wird zunächst das Werkstück - z.B. eine Walze - auf der Mittelstütze 3 gelagert und ausgerichtet, wonach dann durch Aufschaltung des hydraulischen Drucks auf das Lamellenpaket die völlige Abstützung für den Schleifvorgang - im Falle einer Schleifmaschine - bewirkt wird. Dabei ist über den Umfang des Lagerzapfens gesehen noch ein weiteres Lagersegment angeordnet, das ähnlich wie das dargestellte aufgebaut ist und zur Seitenführung des Werkstücks dient. Die Lagerschale 1 erstreckt sich dabei bis zu diesem weiteren Lagersegment, was hier nicht weiter dargestellt ist. Man kann die dargestellte Segmentlagerung für einen Durchmesserbereich von etwa 50 mm Differenz benutzen, so daß für die entsprechenden Durchmessersprünge jeweils ein neues Lamellenpaket je Lagersegment vorhanden sein müßte. Der Druckölraum ist am Lamellenpaket mittels einer Rundschnurdichtung 37 und an der Mittelstütze 3 mittels Runddichtung 38 abgedichtet. Der Führungsraum 8 ist durch seitliche Platten 39 begrenzt, die entsprechend den durch die strichpunktierten Mittellinien an ihrer Lage gekennzeichnete bzw. angedeutete Schrauben am Gehäuse 24 befestigt sind.

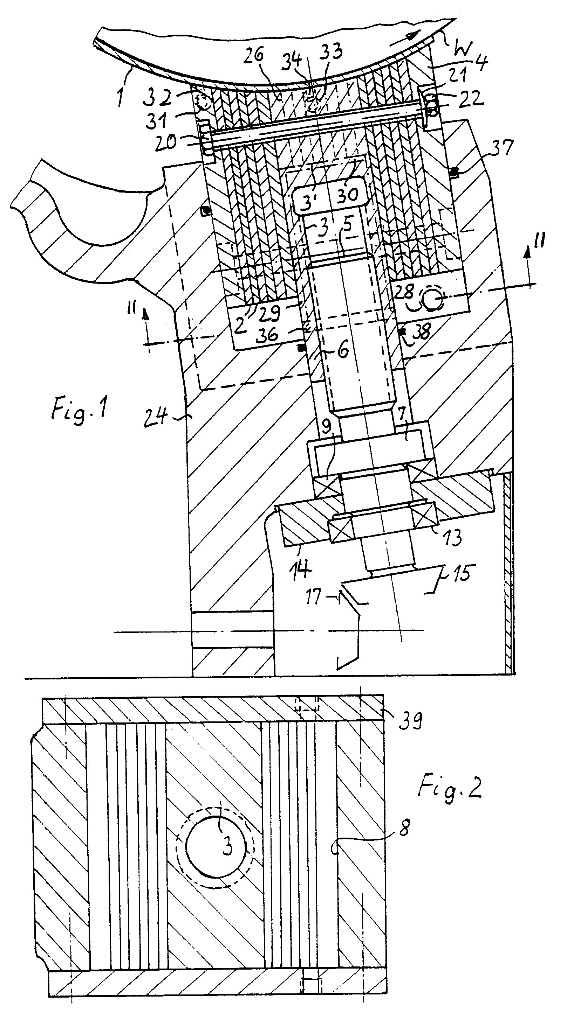

Es ist noch in Fig. 1 nur strichpunktiert angedeutet, daß das Lamellenpaket nicht durch eine Mittelstütze 3′ unterbrochen sein muß, sondern daß in deren Bereich sich kürzere Lamellen 26 befinden können. Mittels Aussparungen 29 und 30, die in der Mittelstütze 3′ vorgesehen sind, besteht die Möglichkeit, auch diese Lamellen mit Druckflüssigkeit zu beaufschlagen. Man kann z.B. nach Aufbringen der Druckflüssigkeit die Mittelstütze 3′ etwas zurückziehen, so daß der hydraulische Druck voll unter die kürzeren Lamellen 26 gelangen kann. Man hat hiermit eine durchgehende, noch bessere Abstützung der Lagerschale 1 bei verschiedenen Lagerdurchmessern.

Ferner könnte, zumindest für ein oberes Lagersegment, das nur verhältnismäßig geringe Lagerkräfte aufzubringen hat, die sogenannte Mittelstütze auch seitlich, also seitlich neben allen Lamellen 2 im Raum 8 angeordnet werden.

Die Druckölzuführung für den Kolbenraum ist durch die Bohrung 28 angedeutet. Die Druckflüssigkeit für hydrostatische Druckentlastung und/oder Lagerschmierung ist jeweils durch Bohrungen 31, 32, 33 und 34 angedeutet, bei Drehrichtung des Werkstücks W (Walze) entsprechend dem dort eingetragenen Pfeil.

## Patentansprüche

1. Lagersegment für ein Auflager zur Unterstützung eines Bauteils, insbesondere eines Werkstücks (W) in einer Walzenschleifmaschine, mit einem zumindest überwiegend aus parallelen Lamellen (2) bestehenden Lagersegment, dessen einzelne Lamellen (2) parallel zu einer Ebene angeordnet sind, die durch die zentrale Längsachse des Auflagers verläuft, wobei die Lamellen innerhalb eines Raumes (8) geführt sind, dessen von den Lamellen (2) und eventuellen Seitenführungsplatten (4) für die Lamellen (2) freier Teil zur Bildung eines Kolbenraumes dient, der mit hydraulischer Druckflüssigkeit gefüllt ist, dadurch gekennzeichnet, daß eine Leicht verformbare Stützschale (1), die auf die Lamellen (2) aufliegt und sich am Lagerzapfen des als Werkstucks (W) ausgebildeten Bauteils anschmiegen kann, vorgesehen ist.

2. Lagersegment für Segmentlager nach Anspruch 1, dadurch gekennzeichnet, daß die stützschale (1) den Lagerzapfen im gestützten Umfangsbereich umfaßt.

3. Lagersegment für Segmentlager nach Anspruch 1, gekennzeichnet durch eine seitliche Stütze oder zentrale Mittelstütze (3), die im Auflagergehäuse (24) über einen Bund (7) mittels Kugel-, Rollen- oder Tonnenlagern (9, 13) abgestützt ist.

4. Lagersegment für Segmentlager nach Anspruch 3, dadurch gekennzeichnet, daß die Mittelstütze (3) oder seitliche Stütze mittels Hubspindel (5) verstellbar ist.

5. Lagersegment für Segmentlager nach Anspruch 3 oder 4, dadurch gekennzeichnet, daß im Bereich der Mittelstütze (3') oder seitlichen Stütze entsprechend der auf die sonstigen Lamellen (2) entfallenden Länge der Mittelstütze (3') oder seitlichen Stütze kürzere Preßlamellen (26) vorgesehen sind.

6. Lagersegment für Segmentlager nach Anspruch 3 oder 4, dadurch gekennzeichnet, daß die Mittelstütze (3) das Lamellenpaket quer zur Richtung der zentralen Längsachse des Auflagers bzw. des Werkstücks völlig unterteilt.

7. Lagersegment für Segmentlager nach einem der Ansprüche 3 bis 6, dadurch gekennzeichnet, daß die Mittelstütze (3, 3′) über eine gesonderte Hubspindel (5), die den Bund (7) aufweist, verstellbar ist.

8. Lagersegment für Segmentlager nach einem der Ansprüche 1 bis 7, gekennzeichnet durch eine hydrostatische Druckölentlastung im Lamellen- und Stützschalenbereich.

9. Lagersegment für Segmentlager nach einem der Ansprüche 1 bis 8, dadurch gekennzeichnet, daß die Mittelstütze (3′) oder Seitenstütze in ihrem an den Lamellen anliegenden Bereich quaderförmig ausgebildet ist mit den Lamellen entsprechenden Querschnittsabmessungen, wobei sie etwas länger als die unmittelbar an ihr anliegenden Lamellen sein kann.

## Claims

1. A bearing segment for a bearing surface for supporting a component part, particularly a workpiece (W) in a roller grading machine with a bearing segment consisting at least predominately of parallel plates (2) of which individual plates (2) are disposed parallel with a plane extending through the central longitudinal axis of the bearing surface, the plates being guided within a space (8), the part of which free of the plates (2) and possible lateral guiding plates (4) for the plates (2) serving to form a piston space which is filled with pressurized hydraulic fluid, characterised in that a readily deformable bracing shell (1) is provided which rests on the plates (2) and is able to blend itself against the bearing journal of the component which is constructed as a workpiece (W).

2. A bearing segment for segmental bearings according to claim 1, characterised in that the bracing shell (1) encloses the supported peripheral part of the bearing journal.

3. A bearing segment for segmental bearings according to claim 1, characterised by a lateral brace or central middle brace (3) supported in the bearing surface housing (24) by ball, roller or drum bearings (9, 13) through a shoulder (7).

4. A bearing segment for segmental bearings according to claim 3, characterised in that the central support (3) or lateral support is adjustable by means of a elevating spindle (5).

5. A bearing segment for segmental bearings according to claim 3 or 4, characterised in that shorter pressure plates (26) are provided in the region of the central support (3') or lateral support according to the length of the central support (3') or lateral support which is spread over the other plates (2).

6. A bearing segment for segmental bearings according to claim 3 or 4, characterised in that the central support (3) completely sub-divides the plate package crosswise to the direction of the central longitudinal axis through the bearing surface of workpiece.

7. A bearing segment for segmental bearings according to one of claims 3 to 6, characterised in that the central support (3, 3') is adjustable by means of a separate elevating spindle (5) which has the shoulder (7).

8. A bearing segment for segmental bearings according to one of claims 1 to 7, characterised by a pressurized hydrostatic fluid relieving arrangement in the plate and bracing shell area.

9. A bearing segment for segmental bearings according to one of claims 1 to 8, characterised in that the central support (3') or lateral support is of parallelepiped construction in its part which bears on the plates and has cross-sectional dimensions corresponding to the plates, although it may be somewhat longer than the plates bearing directly on it.

## Revendications

1. Segment de palier pour un appui de soutien d'un élément de construction, en particulier une pièce à usiner (W), sur une rectifieuse de cylindres, avec un segment de palier composé, au moins principalement, de lamelles parallèles (2), dont chaque lamelle (2) est disposée parallèlement à un plan passant par l'axe central longitudinal de l'appui, les lamelles étant maintenues à l'intérieur d'un boîtier (8), dont la partie laissée libre par les lamelles (2) et par d'éventuelles plaques de guidage latérales (4) des lamelles (2), sert à la formation d'un corps de piston, rempli de fluide hydraulique sous pression, caractérisé :
en ce qu'il est prévu une coquille de coussinet (1) facilement déformable, reposant sur les lamelles (2), grâce à quoi elle peut épouser la forme du tourillon de palier de l'élément de construction constitué par la pièce à usiner (W).

2. Segment de palier pour palier segmenté selon la revendication 1, caractérisé :
en ce que la coquille de coussinet (1) tient embrassé le tourillon de palier dans la zone circonférentielle soutenue.

3. Segment de palier pour palier segmenté selon la revendication 1, caractérisé :
en ce qu'un appui latéral ou un appui central (3) est soutenu dans le boîtier d'appui (24) sur une collerette (7) au moyen de roulements à billes, à rouleaux ou à tonneaux (9, 13).

4. Segment de palier pour palier segmenté selon la revendication 3, caractérisé :
en ce que le support central (3) ou le support latéral est déplaçable au moyen d'une vis de montée (5).

5. Segment de palier pour palier segmenté selon l'une quelconque des revendications 3 et 4, caractérisé :
en ce que dans la zone du support central (3') ou du support latéral, des lamelles de compression plus courtes (26) sont prévues, conformément à la longueur du support central (3') ou du support latéral qui se répartit sur les autres lamelles (2).

6. Segment de palier pour palier segmenté selon la revendication 3 ou 4, caractérisé :
en ce que le support central (3) divise entièrement le paquet de lamelles, transversalement au sens de l'axe central longitudinal de l'appui ou de la pièce à usiner.

7. Segment de palier pour palier segmenté selon l'une des revendications 3 à 6, caractérisé :
en ce que le support central (3, 3') est déplaçable au moyen d'une vis de montée séparée (5) comportant une collerette de butée (7).

8. Segment de palier pour palier segmenté selon l'une des revendications 3 à 7, caractérisé par une décharge par huile sous pression hydrostatique dans la zone des lamelles et de la coquille de coussinet.

9. Segment de palier pour palier segmenté selon l'une des revendications de 3 à 8, caractérisé :
en ce que le support central, (3') ou le support latéral, est en forme de parallélépipède dans la zone en contact avec les lamelles, avec des dimensions en coupe transversale correspondant aux lamelles, le support pouvant être légèrement plus long que les lamelles directement en contact.
